Europäisches Patentamt

European Patent Office

Office européen des brevets

(19)

(11) Numéro de publication : **0 661 544 A1**

(12) **DEMANDE DE BREVET EUROPEEN**

(21) Numéro de dépôt : **94410113.8**

(22) Date de dépôt : **29.12.94**

(51) Int. Cl.[6] : **G01P 3/50,** G01C 22/02, A63B 21/00

(30) Priorité : **30.12.93 FR 9316030**

(43) Date de publication de la demande : **05.07.95 Bulletin 95/27**

(84) Etats contractants désignés : **BE DE FR GB IT NL**

(71) Demandeur : **Riche, Raymond 7, Rue Eugène Ravanat F-38320 Eybens (FR)**

(72) Inventeur : **Riche, Raymond 7, Rue Eugène Ravanat F-38320 Eybens (FR)**

(74) Mandataire : **de Beaumont, Michel 1bis, rue Champollion F-38000 Grenoble (FR)**

(54) **Compteur de performances tenant compte de paramètres d'un parcours.**

(57) La présente invention concerne un compteur de vitesse pour un individu se déplaçant sous l'effet de sa force musculaire, comprenant des moyens de fourniture de données de performances ; des moyens de mesure, directe ou indirecte, d'au moins un paramètre affectant l'effort à fournir pour obtenir le déplacement ; et des moyens, tenant compte de valeurs de coefficients liés à la valeur dudit paramètre et aux caractéristiques propres de l'individu, de fourniture de données de vitesse équivalente correspondant à la valeur qu'aurait eue la vitesse pour un même effort quand ledit paramètre a sa valeur de repos.

C

F

Vie **31.5** km/h

Vi **11.5** km/h

A    B

Fig 4 A

EP 0 661 544 A1

La présente invention concerne un compteur de performances, notamment de vitesse et de distance, pour un individu se déplaçant sous l'effet de sa force musculaire.

La présente invention sera exposée ci-après en relation avec un compteur de bicyclette mais elle s'applique à tout autre engin mobile actionné par la force musculaire, par exemple un compteur de canot à rames, ou au déplacement d'un marcheur ou d'un coureur utilisant un podomètre, ce dernier terme étant couvert par le mot compteur.

Dans l'état actuel de la technique, on a développé des compteurs électroniques, en particulier de bicyclette, à base de microprocesseurs et de mémoires, comprenant des mayens de mesure de distance et de temps, et fournissant à partir de ces données diverses valeurs de temps de trajet, de distance parcourue, de cumul de distance, de vitesse instantanée, de vitesse moyenne, de vitesse maximum... Certains de ces compteurs sont également associés à des capteurs d'altitude, à partir desquels on fournit des valeurs cumulées de dénivelés positifs et négatifs (montée et descente), à des détecteurs du rythme cardiaque du cycliste, à des systèmes de mesure de couple ou de puissance...

Les moyens matériels et logiciels de prise de mesure, de calcul, de programmation, de mémorisation et d'affichage de ces compteurs seront considérés ici comme connus.

La présente invention vise à la réalisation d'un compteur permettant, outre les mesures, calculs et affichages ci-dessus mentionnés, de détecter de façon générale au moins un paramètre extérieur lié aux conditions de parcours, ce paramètre étant par exemple le dénivelé, le vent, un freinage, mais pouvant aussi être une condition de pluviométrie, un temps d'arrêt, une particularité du parcours... Cette détection est utilisée pour fournir, en fonction de ce paramètre, la vitesse et/ou la distance qu'aurait parcourue le cycliste si ce paramètre avait sa valeur de repos.

La présente invention s'applique notamment à des cyclistes. Les cyclistes savent que s'ils veulent effectuer un parcours leur prenant normalement plusieurs heures, ils doivent gérer leurs efforts de façon à fournir un effort sensiblement constant. Cet effort correspond à une vitesse moyenne en plat et en l'absence de vent vmp donnée, cette vitesse étant par exemple de 30 km/h. Ainsi, un cycliste utilisant un compteur classique s'efforcera de maintenir sa vitesse autour de 30 km/h s'il veut effectuer un parcours dans les meilleures conditions : ni trop lentement, ni trop vite pour ne pas épuiser ses forces. Toutefois, quand le cycliste se trouve dans des conditions de parcours autres qu'à plat et sans vent, il est clair que pour un même effort sa vitesse sera modifiée. Ce cycliste sait bien que, s'il est en montée, il doit aller moins vite qu'en plat pour s'économiser, mais il ne dispose alors plus sur son compteur d'indication lui donnant la vitesse à atteindre pour fonctionner à effort constant et sa propre sensation d'effort est très subjective et trompeuse, et survient souvent avec un certain retard.

Il en est de même si le cycliste se trouve en présence d'un vent de face ou de dos ou si d'autres paramètres extérieurs varient. Par exemple, il lui faudra faire un plus grand effort s'il freine puisqu'il doit ensuite rétablir sa vitesse, si la route est très bosselée, s'il est seul ou en groupe, etc. On peut aussi considérer que son effort sera inégal selon la température.

Ainsi, la présente invention propose un compteur qui fournisse à un cycliste, en présence d'un paramètre spécifique aux conditions de la portion de parcours qu'il effectue, la vitesse équivalente qu'il atteindrait à effort constant si le paramètre en question avait sa valeur de repos (un plat dans le cas d'un paramètre de dénivelé, une absence de vent dans le cas d'un paramètre lié au vent, une absence de freinage dans le cas d'un paramètre lié au freinage).

La présente invention propose aussi un procédé et un compteur permettant à un cycliste de déterminer a priori ou a posteriori la distance équivalente à plat d'un parcours donné. Connaissant sa vitesse moyenne à plat, il pourra ainsi déterminer a priori le temps que lui prendra une randonnée ou déterminer a posteriori la distance équivalente qu'il aurait parcourue si le trajet avait été plat et dans des conditions idéales.

La mise en oeuvre de la présente invention se base sur une analyse de l'influence de ces paramètres extérieurs et sur les variations de vitesse qu'ils entraînent à effort constant.

Comme on le verra plus en détail ci-après, notamment dans l'exemple de l'analyse de l'influence du dénivelé, il apparaîtra que chacun de ces paramètres nécessite une étude particulière, leur influence n'étant généralement pas linéaire : pour un cycliste donné, la variation de vitesse n'est pas proportionnelle à la pente. D'autre part, les effets de ces paramètres sont spécifiques à un cycliste ou à un type de cycliste : deux cyclistes ayant la même vitesse moyenne en plat ne devront pas fournir la même variation d'effort pour gravir une côte de pente donnée. Selon leur morphologie, leur poids, leur entraînement, leur technicité, l'effort variera. C'est un aspect de la présente invention que de prévoir un compteur fournissant des données de vitesse et de distance équivalentes susceptibles de tenir compte de l'utilisateur.

Ainsi, de façon générale, la présente invention prévoit un procédé de mesure et de gestion des efforts d'un individu se déplaçant sous l'effet de sa force musculaire, ce déplacement étant susceptible d'être affecté par divers paramètres, comprenant les étapes consistant à établir pour chaque paramètre une table de correspondance entre la vitesse instantanée du déplacement et la vitesse équivalente qui serait atteinte si le paramètre était à sa valeur de repos et pour un même effort ; mesurer la vitesse instantanée et la valeur des paramètres ; et fournir pour chaque vitesse instantanée la vitesse équivalente correspondante.

Selon un mode de réalisation de la présente invention, la table de correspondance consiste en un coefficient de proportionnalité.

La présente invention prévoit également un compteur de performances pour un individu se déplaçant sous l'effet de sa force musculaire, comprenant des moyens de mesure d'une donnée caractéristique du déplacement, des moyens de mesure, directe ou indirecte, d'au moins un paramètre affectant l'effort à fournir pour obtenir le déplacement, des moyens de fourniture de coefficients liés à la valeur dudit paramètre, et des moyens, tenant compte desdits coeffficients, pour fournir une indication de performance traduisant la valeur qu'aurait eue ladite donnée caractéristique pour un même effort quand ledit paramètre a sa valeur de repos.

Selon un mode de réalisation de la présente invention, les coefficients sont liés à la valeur du paramètre et aux caractéristiques propres de l'individu.

Selon un mode de réalisation de la présente invention, la donnée caractéristique est la vitesse et l'indication de performance est une vitesse équivalente.

Selon un mode de réalisation de la présente invention, le compteur comprend des moyens d'introduction de la vitesse moyenne normale pour des valeurs de repos dudit au moins un paramètre ; des moyens pour mémoriser et/ou calculer des tables de coefficients en fonction des variations dudit paramètre ; et des moyens de calcul de vitesse équivalente en tenant compte desdites tables de coefficients.

Selon un mode de réalisation de la présente invention, le compteur est associé à une bicyclette.

Selon un mode de réalisation de la présente invention, le paramètre considéré est le dénivelé, et la vitesse équivalente est déterminée par la relation :

$$v_{ie} = v_i (1 + k_m p) \text{ ou } v_{ie} = v_i (1 - k_d p)$$

où $v_{ie}$ est la vitesse instantanée équivalente, $v_i$ la vitesse instantanée, $p$ la pente, $k_m$ un coefficient fonction de la pente et du cycliste pour une pente positive, et $k_d$ un coefficient fonction de la pente et du cycliste pour une pente négative.

Selon un mode de réalisation de la présente invention, le compteur comprend des moyens de calcul d'un indice de performances calculé en fonction de la vitesse équivalente instantanée et de la vitesse moyenne à plat.

Selon un mode de réalisation de la présente invention, le compteur est associé à un détecteur de rythme cardiaque et comprend des moyens de calcul et d'affichage d'un indice de forme F calculé en fonction de la vitesse instantanée équivalente et du rythme cardiaque détecté, par exemple :

$$F = v_{ie} N_0 / v_{mp} N_i,$$

où :

$v_{ie}$ est la vitesse instantanée équivalente,

$v_{mp}$ est la vitesse moyenne à plat,

$N_0$ est le rythme cardiaque pour un effort normal à plat, et

$N_i$ est le rythme cardiaque détecté.

Selon un mode de réalisation de la présente invention, le compteur comprend des moyens pour inhiber la prise en compte du dénivelé quand la variation de pente au cours d'un intervalle de temps donné ne dépasse pas un seuil prédéterminé.

Selon un mode de réalisation de la présente invention, le compteur comprend des moyens pour inhiber la prise en compte des variations d'altitude quand celles-ci conduisent à des valeurs de la pente incompatibles avec la vitesse et les coefficients propres à l'individu.

Selon un mode de réalisation de la présente invention, ledit paramètre est le vent, la vitesse instantanée équivalente $v_{ie}$ est déterminée par la relation $v_{ie} = v_{mp} \pm V_t^x$ et la distance équivalente due au vent $d_{ev}$ par $d_{ev} = SIGMA(K_{vi}.DELTAd_i)$

où $v_{mp}$ est la vitesse moyenne à plat sans vent,

$x$ est un coefficient associé à l'individu,

$V_t$ est la vitesse du vent,

$K_{vi}$ un coefficient lié au cycliste,

$d_i$ une distance.

Selon un mode de réalisation de la présente invention, le compteur comprend des moyens de calcul de la valeur moyenne de la vitesse équivalente et de la distance équivalente parcourue.

Selon un mode de réalisation de la présente invention, le compteur comprend des moyens pour indiquer le développement conseillé et la cadence optimale. De préférence, le compteur est associé à un système de changement de développement à commande électrique et les valeurs desdits paramètres sont utilisées pour commander automatiquement des changements de développement.

Selon un mode de réalisation de la présente invention, le compteur comprend au moins une commande actionnable par le cycliste pour mémoriser en certains points du parcours des données telles que la distance parcourue, l'altitude et l'heure.

Ces objets, caractéristiques et avantages ainsi que d'autres de la présente invention seront exposés en détail dans la description suivante de modes de réalisation particuliers faite à titre non-limitatif en relation avec les figures jointes parmi lesquelles :

la figure 1 représente un organigramme illustrant la fourniture d'une vitesse instantanée équivalente en fonction d'un dénivelé positif ou négatif ;

la figure 2 est un organigramme illustrant la mise à jour d'un coefficient de montée pour un cycliste donné ;

la figure 3 illustre un organigramme de calcul de pente instantanée ; et

les figures 4A à 4E illustrent à titre d'exemple une réalisation d'un compteur selon la présente invention.

## 1. DÉNIVELÉ

Un mode de réalisation d'un compteur selon la présente invention tenant compte d'un seul paramètre extérieur, le dénivelé positif ou négatif du parcours, va d'abord être exposé.

La présente invention prévoit de fournir une vitesse instantanée équivalente vie qui dépend de la pente p et de la vitesse instantanée réelle vi et qui peut s'exprimer par :

$$v_{ie} = v_i + k_m.p.v_i, \text{ en montée,} \quad (1)$$

ou

$$v_{ie} = v_i - k_d.p.v_i, \text{ en descente,} \quad (2)$$

où $k_m$ et $k_d$ sont des coefficients qui s'appliquent respectivement à une montée et à une descente et qui, dans le cas général, sont des fonctions de la pente et du cycliste.

Ces relations permettent de réaliser un compteur affichant la vitesse équivalente de sorte que le cycliste puisse en permanence rester à son niveau d'effort optimal.

Pour étalonner ce compteur, le cycliste déterminera d'abord sa vitesse moyenne à plat sans vent $v_{mp}$ : c'est sa vitesse moyenne sur un parcours réalisé à vitesse régulière sur une ou plusieurs heures (selon qu'il souhaite tenir compte d'un certain coefficient de fatigue).

## 1.1 MONTÉE

Ensuite, le cycliste détermine son coefficient d'équivalence en montée $k_m$ qui dépend de sa morphologie et de ses capacités physiques. Le coefficient $k_m$ varie avec la pente d'autant plus que le cycliste est moins puissant et qu'il est moins bon grimpeur car il est alors plus sensible aux variations de pente. Chaque cycliste peut déterminer sa propre courbe de coefficients $k_m$. Pour cela, il mesure sa vitesse instantanée sur une relativement grande durée pour une pente $p_l$ constante donnée tandis qu'il s'efforce de faire le même effort que quand il était à plat à la vitesse $v_{mp}$. Il en déduit d'après l'équation (1) la valeur de son coefficient $k_m$ pour cette pente

$$k_m(p) = [(v_{mp}/v_l) - 1]/p. \quad (3)$$

De façon générale, les coefficients $k_m$ s'expriment en fonction de la pente par une courbe ou un tableau. Dans le tableau 1 ci-après :

la colonne 1 indique des pentes successives de 0 à 16 %,

la colonne 2 indique des vitesses observées pour un cycliste donné à effort constant, pour ces diverses pentes (sa vitesse équivalente à plat étant toujours de 30 km/h), et

dans les trois dernières colonnes, on a exprimé la vitesse instantanée calculée par la formule suivante déduite de l'équation (3) :

$$v_i = v_{mp}/(1 + k_m.p) \quad (4)$$

- Dans la colonne 3, on a posé $k_m$ = constante = 30.
- Dans la colonne 4, on a posé $k_m$ = 20+p.
- Dans la colonne 5, on a posé $k_m = 23+p^{0,9}$.

4

TABLEAU 1

| | | $v_i = v_{mp}/(1+k_m.p)$ | | |
|---|---|---|---|---|
| p (%) | v (km/h) | $k_m=30$ | $k_m=20+p$ | $k_m=23+p^{0,9}$ |
| 0 | 30,0 | 30,0 | 30,0 | 30,0 |
| 1 | 25,0 | 23,1 | 24,8 | 24,2 |
| 2 | 21,0 | 18,8 | 20,8 | 20,0 |
| 3 | 17,0 | 15,8 | 17,8 | 16,9 |
| 4 | 15,0 | 13,6 | 15,3 | 14,6 |
| 5 | 13,0 | 12,0 | 13,3 | 12,7 |
| 6 | 11,0 | 10,7 | 11,7 | 11,2 |
| 7 | 10,0 | 9,7 | 10,4 | 10,0 |
| 8 | 8,8 | 8,8 | 9,3 | 8,9 |
| 9 | 8,0 | 8,1 | 8,3 | 8,1 |
| 10 | 7,3 | 7,5 | 7,5 | 7,3 |
| 11 | 6,7 | 7,0 | 6,8 | 6,7 |
| 12 | 6,2 | 6,5 | 6,2 | 6,1 |
| 13 | 5,7 | 6,1 | 5,7 | 5,7 |
| 14 | 5,4 | 5,8 | 5,2 | 5,2 |
| 15 | 5,0 | 5,5 | 4,8 | 4,9 |
| 16 | 4,7 | 5,2 | 4,4 | 4,5 |

On déduira de ce tableau qu'il est toujours possible pour un cycliste donné de trouver une loi de variation de $k_m$ qui approche assez bien sa loi de variation réelle et qui peut, dans certains cas se résumer au choix d'une valeur constante de $k_m$.

Ainsi, un cycliste connaissant sa vitesse moyenne à plat $v_{mp}$ et souhaitant construire son tableau de coefficients $k_m$ pourra ou bien effectuer des tests sur diverses pentes ou bien partir d'un tableau existant pour un cycliste d'entraînement et de conformation similaires et, en cours d'utilisation, affiner les valeurs du tableau s'il s'aperçoit qu'il monte plus facilement ou plus difficilement que prévu.

## 1.2 DESCENTE

De même, en descente, on peut exprimer la vitesse instantanée équivalente par la formule $v_i=v_{mp}/(1-k_d.p)$ (5) déduite de l'équation (2). Pour un cycliste donné, le coefficient $k_d(p)$ pour une pente p donnée se détermine par la mesure de la vitesse de descente $v_i$ dans cette pente : $k_d(p)=(1-v_{mp}/v_i)/p$. Pour le cycliste pris comme exemple en montée, le coefficient $k_d$ peut par exemple être calculé par la formule $k_d=30.p^{0,7}$.

De plus, en descente, les éventuelles sinuosités de la route ont une grande importance et on pourra effectuer une correction supplémentaire en tenant compte du nombre de virages serrés par kilomètre de descente.

## 1.3 REALISATION D'UN COMPTEUR DE VITESSE EQUIVALENTE

Une fois les tableaux des coefficients $k_m$ et $k_d$ établis pour un cycliste donné, ils sont stockés dans un compteur électronique selon l'invention qui, de même que des compteurs connus, comprend un microprocesseur et des moyens de mémoire et est associé à des capteurs pour mesurer la vitesse instantanée $v_i$, l'altitude

A, le temps t, la distance d.

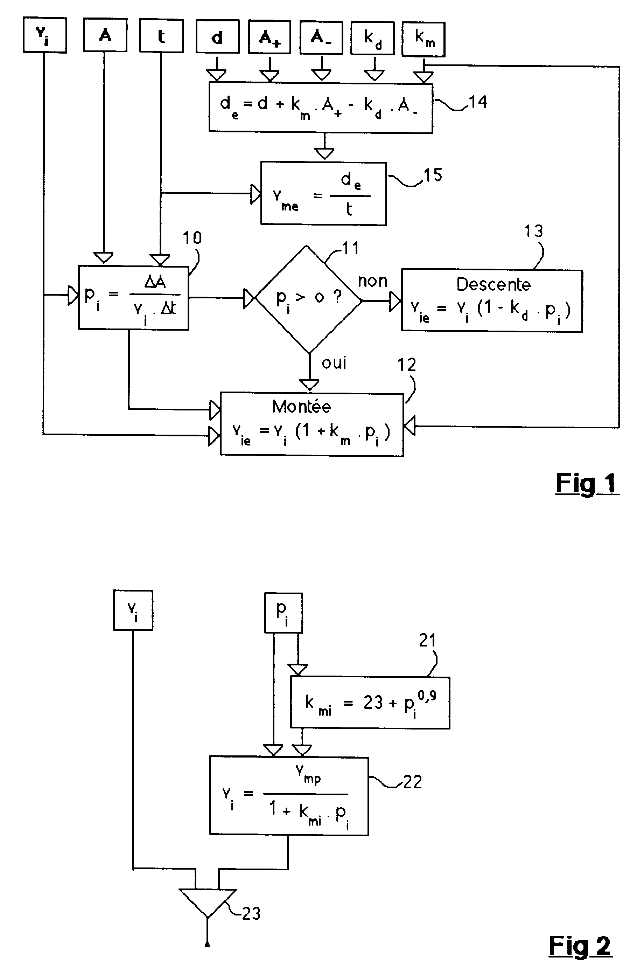

Un schéma simplifié sous forme de blocs fonctionnels d'un tel compteur est illustré en figure 1.

Outre les blocs de détection et de calcul de vitesse instantanée $v_i$, d'altitude A, de temps t, de distance d, de dénivelé positif $A_+$, de dénivelé négatif $A_-$, ce compteur comprend des blocs désignés par $k_m$ et $k_d$. Chacun de ces derniers blocs peut être une mémoire fournissant pour chaque valeur de la pente la valeur correspondante de $k_m$ ou de $k_d$, ou peut être un moyen de calcul calculant, à partir d'une formule telle que celles présentées précédemment et adaptée au cycliste, la valeur de $k_m$ ou de $k_d$ pour chaque valeur de la pente.

Un bloc 10 permet de calculer la pente $p_i$. Un bloc de décision 11 détermine si cette pente est positive ou négative. Si elle est positive, on calcule dans un bloc 12 la vitesse instantanée équivalente en montée :

$$v_{ie} = v_i(1 + k_m p).$$

Si elle est négative, on calcule dans un bloc 13 la vitesse instantanée équivalente en descente :

$$v_{ie} = v_i(1 - k_d p).$$

On a indiqué ci-dessus que les diverses formules étaient calculées dans des blocs distincts. En pratique, ces opérations peuvent être réalisées par un microprocesseur convenablement programmé.

On pourra afficher à chaque instant une ou plusieurs des valeurs obtenues. De préférence, on affichera en permanence la vitesse instantanée équivalente vie qui est pour le cycliste un paramètre essentiel pour la gestion de son effort. Dans un mode de réalisation de la présente invention, le compteur permet en outre l'affichage d'une indication du fait que le cycliste est au-dessus ou en-dessous de sa vitesse moyenne à plat normale. Cet affichage peut prendre la forme de diodes électroluminescentes rouge et verte, de signes + et -...

Comme on l'a indiqué précédemment, un objet de la présente invention est de fournir non seulement une indication de vitesse équivalente mais aussi une indication de distanoe équivalente. Cette distanoe équivalente peut être calculée, d'une façon non représentée en figure 1, en intégrant ou en sommant les valeurs de vitesse instantanée équivalente. On peut aussi, comme cela est indiqué dans le bloc 14, calculer la distance équivalente instantanée par la formule :

$$d_e = d + k_m.A_+ - k_d.A_-. \quad (6)$$

La vitesse moyenne équivalente du parcours, $v_{me}$, peut être déterminée par la relation $v_{me}=d_e/t$, comme cela est indiqué dans le bloc 15.

Ainsi, à tout moment lors de son parcours, le cycliste pourra connaître la distance équivalente parcourue, c'est-à-dire la distance qu'il aurait parcourue s'il n'y avait pas eu de dénivelé.

On pourra aussi utiliser les moyens de calcul inclus dans le compteur selon l'invention pour préparer un parcours. Alors, le cycliste relève sur une carte les caractéristiques du parcours (distance à plat, dénivelés à diverses pentes ascendantes et descendantes) et calcule la distance équivalente pour chaque portion de trajet à partir de la formule (6), puis évalue la distance équivalente totale par sommation. Connaissant sa vitesse moyenne à plat, il pourra ainsi déterminer à l'avance le temps que devrait normalement lui prendre ce parcours, y compris les temps de passage à certains points spécifiques.

## 1.4 MISE À JOUR DES COEFFICIENTS

Selon un aspect de la présente invention, les blocs $k_d$ et $k_m$ sont reprogrammables à partir de touches associées au compteur.

Un mode de mise à jour des coefficients liés à la pente est illustré en figure 2. On a représenté des capteurs de vitesse instantanée et de pente instantanée $v_i$ et $p_i$ ainsi qu'un système de calcul 21 fournissant le coefficient $k_{mi}$ correspondant à cette pente $p_i$, par exemple $k_{mi}=23+p_i^{0,9}$.

Dans un bloc 22, on calcule vi à partir de la formule (4). On peut alors comparer dans un comparateur 23 la vitesse instantanée calculée par le bloc 22 et la vitesse instantanée mesurée. La sortie du comparateur 23 est par exemple comparée à un seuil et, quand ce seuil est dépassé, il est signalé au cycliste que, s'il est en train de pédaler à un rythme qui lui semble correspondre à son effort normal moyen, il est souhaitable qu'il modifie ses coefficients k. On peut aussi prévoir un système d'ajustement automatique modifiant l'un des paramètres de calcul de k sur requête du cycliste actionnant une touche spécifique de son compteur.

On peut aussi déterminer la vitesse instantanée équivalente vie à partir de la valeur $k_{mi}$ obtenue par préprogrammation du genre $23+p_i^{0,9}$ : $v_{ie}=v_i(1+k_{mi}p_i)$, ce qui permet la détermination de la distance équivalente en montée qui est la somme des produits des valeurs de vitesse instantanée par des incréments temporels, et de la valeur du coefficient de montée moyen du parcours $k_m=(d_{em}-d_m)/A_+$.

## 1.5 CALCUL DE PENTE

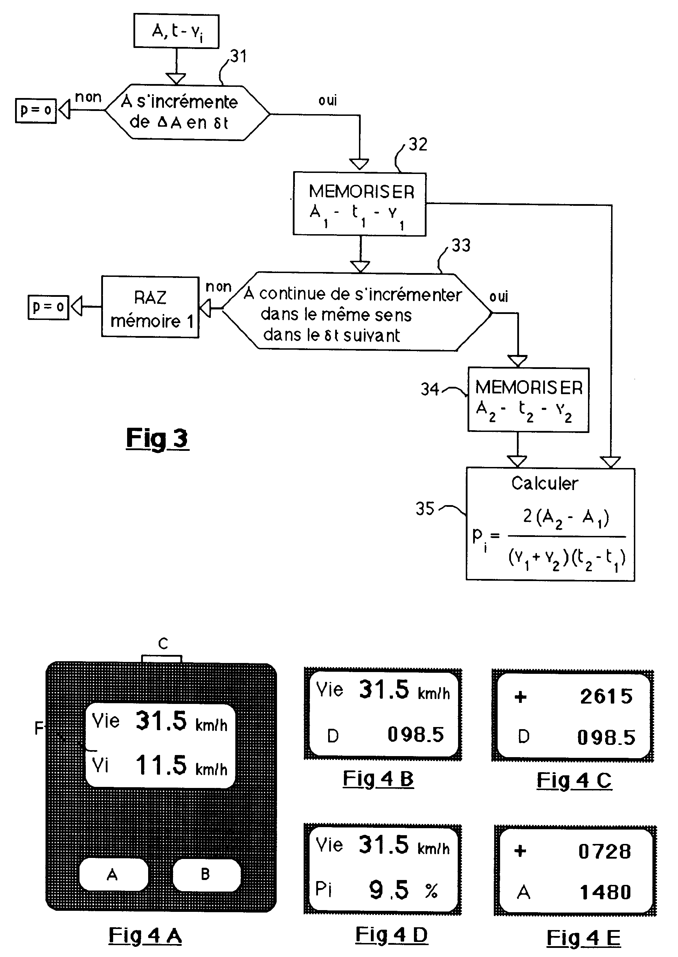

Pour déterminer la pente, on pourra par exemple utiliser le procédé illustré par l'organigramme de la figure 3. Selon ce procédé on analyse dans un bloc 31 les variations de l'altitude A. Lorsque l'altitude ne s'incrémente pas d'une valeur minimale deltaA fixée (par exemple 4 mètres), en un intervalle de temps deltaT donné (par exemple 30 secondes), on considèrera que la variation de pente est nulle. Ensuite, dès que l'altitude s'incrémente de cette valeur minimum fixée (4 mètres) en moins de ce temps (30 s), on mémorise (bloc 32) la valeur $A_1$ de l'altitude et l'instant $t_1$ où elle s'est incrémentée ainsi que la vitesse $v_1$ à cet instant. Si, dans l'intervalle de temps donné suivant (30 s), l'altitude ne s'incrémente pas à nouveau (bloc 33), le système revient à l'état initial et la pente est considérée comme nulle. Si l'altitude continue de s'incrémenter dans le même sens, dès qu'elle atteint une valeur $A_2$ déterminée à partir de $A_1$ (par exemple $A_2=A_1+4m$), l'appareil mémorise l'altitude $A_2$ et l'instant $t_2$ ainsi que la vitesse instantanée $v_2$ à cet instant (bloc 34). Le calculateur établit alors le calcul de la pente instantanée

$$p_i = 2(A_2 - A_1)/[(v_1 + v_2)(t_2 - t_1)] \quad \text{(bloc 35)}$$

et c'est cette valeur de $p_i$ qui est prise en compte dans le bloc 10 de la figure 1.

Ce procédé présente l'avantage de ne pas prendre en compte les variations non-significatives de pente, par exemple quand la pente ne varie que sur une durée très courte (présence d'une bosse sur le parcours).

En outre, le procédé permet d'éliminer l'incidence des variations erratiques de pression, liées par exemple à des sautes de vent. De telles variations de pression, prises en compte dans des compteurs classiques, conduisent à des calculs de dénivelés erronés. Le présent compteur permet d'éliminer la prise en compte de toute variation brutale de pression conduisant à une pente imcompatible avec la vitesse et les coefficients propres au cycliste. Cette imcompatibilité est exprimée par exemple sous forme d'une fourchette de valeurs limites de la vitesse équivalente en fonction de la pente et des coefficients propres au cycliste.

Comme dispositif de mesure de dénivelé, on pourra utiliser divers capteurs de pression classiques.

Au lieu du système décrit ci-dessus, on pourra aussi utiliser un dispositif de mesure directe de la pente constitué par exemple de détecteurs associés au niveau d'un liquide remplissant partiellement des éléments placés dans le cadre d'un cycle.

### 1.6 VARIANTES

Le compteur selon la présente invention pourra, comme des compteurs existants, effectuer et fournir les résultats de diverses mesures, de valeurs moyennes, de valeurs cumulées...

De plus, la pente déterminée par le compteur pourra être utilisée pour afficher le développement optimal (plateau et braquet) à adopter. Une table de correspondance pourra être établie arbitrairement et mémorisée dans le compteur mais sera de préférence introduite par l'utilisateur lui-même ou encore elle sera introduite arbitrairement et des moyens seront prévus pour la mettre à jour. Etant donné que l'on connaît actuellement des systèmes de changement de braquet et/ou de plateau à commande électrique, l'information fournie par le compteur pourra être utilisée pour provoquer un changement automatique de développement.

Selon un autre perfectionnement, le compteur permet de calculer et d'afficher à la demande un indice de performance qui correspond au rapport entre la vitesse équivalente et la vitesse moyenne à plat ou à une autre fonction de ces deux valeurs.

Selon un autre perfectionnement, le compteur permet de calculer et d'afficher à la demande un indioe de forme F. Pour cela, on envoie au compteur des indications sur le rythme cardiaque instantané $N_i$ de l'utilisateur dont le rythme normal est égal à $N_0$ et on calcule, par exemple, $F=v_{ie}N_0/v_{mp}N_i$. Normalement, $F=1$. Une valeur inférieure à 1 indique un état de fatigue et invite le cycliste à réduire son effort. Une valeur supérieure à 1 indique un état de grande forme et invite le cycliste à augmenter son effort. Au lieu d'afficher cet indice de forme, on pourra seulement indiquer qu'il sort des limites d'une fourchette prédéterminée.

### 2. AUTRES PARAMÈTRES

Dans ce qui précède, on a considéré que le paramètre susceptible d'affecter les performances d'un cycliste était le dénivelé. Bien entendu, d'autres paramètres sont susceptibles d'intervenir, tels que le vent, les freinages...

### 2.1 VENT

Si l'on désigne par $v_v$ la composante axiale, positive ou négative, de la vitesse du vent dans le sens de la trajectoire du cycliste, on pourra définir une vitesse équivalente en présence de vent $v_{ie}=v_i+f(v_v)$. Bien entendu, un détecteur mesurant la vitesse du vent et placé sur la bicyclette déterminera la différence entre la vitesse réelle du vent et la vitesse du cycliste. Les calculs correspondants sont aisément effectués par un circuit à microprocesseur.

En vent de face, la formule $f(v_v)=v_v^{0,96}$ donne un résultat satisfaisant.

Comme dans le cas du dénivelé, on pourra définir un coefficient lié au vent $k_v$ tel que la distance équivalente $d_{ev}$ s'exprime par rapport à la distance réelle par l'expression $d_{ev}=k_vd$. Ce coefficient $k_v$ s'écrit dans le cas de l'exemple ci-dessus et d'un vent contraire : $k_v=1/[(v_{mp}/v_v^{0,96})-1]$.

## 2.2 FREINAGE

Tout freinage au cours d'un parcours nécessite une dépense d'énergie supplémentaire pour rétablir la vitesse moyenne normale. Les freinages interviendront donc dans une évaluation rigoureuse de distance équivalente et pourront être détectés par un contact associé à la poignée de frein.

## 2.3 CAS DE PLUSIEURS PARAMÈTRES

Quand plusieurs paramètres extérieurs interviennent simultanément, par exemple vent et dénivelé, on pourra bien entendu en tenir compte, en combinant les calculs susmentionnés.

## 3. EXEMPLE DE RÉALISATION

La figure 4A représente à titre d'exemple la face avant d'un compteur selon la présente invention. Celui-ci contient par exemple une fenêtre d'affichage F et trois touches de commande A, B et C. De façon classique, ce compteur qui comprend un microprocesseur est programmé de sorte que, en fonction des touches actionnées, on puisse réaliser des opérations d'introduction de paramètres, ou des opérations d'affichage de l'une ou l'autre de plusieurs valeurs mesurées et calculées.

On connaît de nombreuses façons de prévoir des touches pour actionner un processeur dans diverses fonctions. A titre d'exemple, la touche B peut initialement être une touche d'arrêt/marche, provoquant la mise en route du compteur et l'affichage normal de la vitesse instantanée $v_i$ et de la vitesse instantanée équivalente $v_{ie}$ dans la fenêtre d'affichage. La touche A peut être une touche de sélection de mode permettant de modifier les données affichées dans la fenêtre F. On pourra par exemple obtenir l'un ou l'autre des affichages des figures 4A à 4E.

L'affichage de la figure 4A indique la vitesse instantanée équivalente $v_{ie}$ et la vitesse instantanée $v_i$.

L'affichage de la figure 4B indique la vitesse instantanée équivalente $v_{ie}$ et la distance D parcourue à partir de la mise en route du compteur.

L'affichage de la figure 4C indique les distances : le chiffre 2615 correspond au total cumulé (en km ou miles) du compteur depuis sa mise en fonction, et la distance D = 98,5 (en km ou miles) correspond à la distance parcourue depuis le début du parcours considéré. Le signe + indique que le cycliste est au-dessus de sa vitesse moyenne.

En figure 4D, on affiche la vitesse instantanée équivalente vie et la pente instantanée $p_i$.

En figure 4E, on indique les altitudes : le chiffre 0728 indique l'altitude en mètres, et la valeur A = 1480 mètres indique la somme des nivelés positifs parcourus par le cycliste depuis le début de sa course. Le signe + indique que la vitesse instantanée équivalente est supérieure à la vitesse moyenne à plat normal du cycliste.

Bien entendu, ceci ne représente que des exemples d'affichage possible.

La touche C permet de mettre le compteur en mode programmation, la programmation étant alors effectuée par actionnement alterné des touches A et B.

Selon un aspect de la présente invention, la touche C, est programmée pour que, quand le compteur est en route, c'est-à-dire que la vitesse instantanée calculée est supérieure à un seuil de désactionnement, une impulsion sur cette touche C provoque une mémorisation de toutes les données présentes dans le compteur, et notamment de la distance parcourue, de l'altitude et de l'heure. Ainsi, quand le cycliste a terminé sa course, il peut consulter certaines données à des passages clés de son parcours, par exemple pour réaliser des statistiques sur ses performances.

De plus, le compteur selon la présente invention pourra comprendre divers moyens de calcul et d'affichage des diverses valeurs indiquées ou de leurs cumuls totaux ou partiels et de leurs moyennes totales ou partielles. On pourra aussi tenir compte de paramètres autres que ceux spécifiquement mentionnés et munir le compteur de divers accessoires tels qu'un système de sauvegarde de mémoire à double compartiment de pile et indicateur de charge.

L'invention, en prenant en compte les énergies nécessitées pour vaincre diverses forces s'opposant au mouvement de l'individu, permet donc de déterminer des indicateurs de performance tels que la vitesse équivalente, la distance équivalente, un indice de performance...

L'invention permet la détermination d'autres indicateurs de performance, tel que la puissance utile qui re-

EP 0 661 544 A1

présente la puissance nécessaire pour vaincre les forces qui s'opposent au mouvement. Un compteur classique mesurant la puissance produite par l'individu (ou le couple exercé et la cadence) est incapable de différencier la partie utile de cette puissance (qui sert à réaliser la performance) de la partie inutile qui viendra par exemple pour un cycliste d'une mauvaise façon de pédaler, du poids de la jambe sur la pédale remontante, d'une mauvaise position sur le vélo, etc.

Pour déterminer ces indicateurs de performance, les données brutes caractéristiques du déplacement (telles que la vitesse ou la puissance produite) sont corrigées par des coefficients associés à des paramètres du parcours (dénivelé, vent...) générateurs de forces extérieures à l'individu, s'opposant au mouvement de celui-ci et, de ce fait, affectant l'effort à fournir pour obtenir le déplacement.

L'invention permet en outre à l'individu concerné de personnaliser ses coefficients en étalonnant son indicateur de performance en fonction de ses propres performances moyennes habituelles ou des performances moyennes habituelles du groupe d'individus par rapport auxquel il entend comparer ses performances.

Enfin, comme on l'a indiqué ad limine, ce compteur pourra s'appliquer à d'autres mobiles qu'une bicyclette, par exemple un canot à rames ; les paramètres à prendre en compte seront alors, par exemple, le courant, les vagues, le vent... Ce compteur pourra aussi être un élément d'un podomètre ; les paramètres essentiels à prendre en compte seront alors le dénivelé ainsi que le vent.

**Revendications**

1. Procédé de mesure et de gestion des efforts d'un individu se déplaçant sous l'effet de sa force musculaire, ce déplacement étant susceptible d'être affecté par divers paramètres, caractérisé en ce qu'il comprend les étapes suivantes :
   établir pour chaque paramètre une correspondance entre la vitesse instantanée du déplacement et la vitesse équivalente qui serait atteinte si le paramètre était à sa valeur de repos et pour un même effort,
   mesurer la vitesse instantanée et la valeur du ou des paramètres, et
   fournir pour chaque vitesse instantanée la vitesse équivalente correspondante.

2. Compteur de performances pour un individu se déplaçant sous l'effet de sa force musculaire, comprenant des moyens de mesure d'une donnée caractéristique du déplacement, caractérisé en ce qu'il comprend :
   des moyens de mesure, directe ou indirecte, d'au moins un paramètre affectant l'effort à fournir pour obtenir le déplacement,
   des moyens de fourniture de coefficients liés à la valeur dudit paramètre, et
   des moyens, tenant compte desdits coeffficients, pour fournir une indication de performance traduisant la valeur qu'aurait eue ladite donnée caractéristique pour un même effort quand ledit paramètre a sa valeur de repos.

3. Compteur selon la revendication 2, caractérisé en ce que lesdits coefficients sont liés à la valeur dudit paramètre et aux caractéristiques propres de l'individu.

4. Compteur selon la revendication 2 ou 3, caractérisé en ce que ladite donnée caractéristique est la vitesse et ladite indication de performance est une vitesse équivalente.

5. Compteur selon la revendication 4, caractérisé en ce qu'il comprend :
   des moyens d'introduction de la vitesse moyenne normale pour des valeurs de repos dudit au moins un paramètre ;
   des moyens pour mémoriser et/ou calculer des valeurs de coefficients en fonction des variations dudit paramètre ; et
   des moyens de calcul de vitesse équivalente en tenant compte desdites valeurs de coefficients.

6. Compteur selon l'une quelconque des revendications 2 à 5, caractérisé en ce qu'il est associé à une bicyclette.

7. Compteur selon la revendication 6, caractérisé en ce que :
   ledit paramètre est la pente, et
   la vitesse instantanée équivalente est déterminée par la relation :
   $$v_{ie} = v_i(1 + k_m p) \text{ ou } v_{ie} = v_i(1 - k_d p)$$
   où $v_{ie}$ est la vitesse instantanée équivalente,

9

$v_i$ la vitesse instantanée,

p la pente,

$k_m$ un coefficient fonction de la pente et du cycliste associé à une pente positive,

$k_d$ un coefficient fonction de la pente et du cycliste associé à une pente négative.

8. Compteur selon l'une quelconque des revendications 4 à 7, caractérisé en ce qu'il comprend des moyens de calcul d'un indioe de performances en fonction de la vitesse équivalente instantanée et de la vitesse moyenne pour la valeur au repos dudit paramètre.

9. Compteur selon l'une quelconque des revendications 4 à 8, caractérisé en ce qu'il est associé à un détecteur de rythme cardiaque et en ce qu'il comprend des moyens de calcul et d'affichage d'un indice de forme F calculé en fonction de la vitesse instantanée équivalente et du rythme cardiaque détecté, par exemple :

$$F = v_{ie}N_0/v_{mp}N_i,$$

où :

$v_{ie}$ est la vitesse instantanée équivalente,

$v_{mp}$ est la vitesse moyenne à plat,

$N_0$ est le rythme cardiaque pour un effort normal à plat, et

$N_i$ est le rythme cardiaque détecté.

10. Compteur selon la revendication 4, caractérisé en ce que le paramètre considéré est la pente et en ce qu'il comprend des moyens pour inhiber la prise en compte des variations d'altitude quand celles-ci conduisent à des valeurs de la pente incompatibles avec la vitesse et les coefficients propres à l'individu.

11. Compteur selon l'une quelconque des revendications 2 à 6, caractérisé en ce que ledit paramètre est le vent et la vitesse instantanée équivalente est déterminée par la relation :

$$v_{ie} = v_{mp} \pm V_t^x$$

où $v_{ie}$ est la vitesse instantanée équivalente,

$v_{mp}$ est la vitesse moyenne à plat sans vent,

x est un coefficient associé à l'individu,

$V_t$ est la vitesse du vent.

12. Compteur selon l'une quelconque des revendications 2 à 11, caractérisé en ce qu'il comprend des moyens de calcul de la distanoe équivalente parcourue.

13. Compteur selon la revendication 6, caractérisé en ce qu'il comprend des moyens pour choisir manuellement ou automatiquement le développement le mieux adapté et indiquer la cadence optimale et pour commander un système de changement de développement à commande électrique.

$$Y_i \quad A \quad t \quad d \quad A_+ \quad A_- \quad k_d \quad k_m$$

$$d_e = d + k_m \cdot A_+ - k_d \cdot A_- \qquad 14$$

$$v_{me} = \frac{d_e}{t} \qquad 15$$

$$p_i = \frac{\Delta A}{v_i \cdot \Delta t} \qquad 10$$

$$p_i > 0 ? \qquad 11$$

non

oui

$$\text{Descente} \qquad 13$$
$$v_{ie} = v_i (1 - k_d \cdot p_i)$$

$$\text{Montée} \qquad 12$$
$$v_{ie} = v_i (1 + k_m \cdot p_i)$$

**Fig 1**

$$Y_i \qquad p_i$$

$$k_{mi} = 23 + p_i^{0,9} \qquad 21$$

$$v_i = \frac{v_{mp}}{1 + k_{mi} \cdot p_i} \qquad 22$$

23

**Fig 2**

$$A, t - v_i$$

*31*

A s'incrémente de ΔA en δt

**non** → $p = 0$

**oui** → *32*

MEMORISER $A_1 - t_1 - v_1$

*33*

A continue de s'incrémenter dans le même sens dans le δt suivant

**non** → RAZ mémoire 1 → $p = 0$

**oui** → *34* MEMORISER $A_2 - t_2 - v_2$

## Fig 3

*35* Calculer
$$p_i = \frac{2(A_2 - A_1)}{(v_1 + v_2)(t_2 - t_1)}$$

C

Vie **31.5** km/h
Vi **11.5** km/h

A     B

## Fig 4 A

Vie **31.5** km/h
D     098.5

## Fig 4 B

+     2615
D     098.5

## Fig 4 C

Vie **31.5** km/h
Pi **9.5** %

## Fig 4 D

+     0728
A     1480

## Fig 4 E

# EP 0 661 544 A1

Office européen
des brevets

**RAPPORT DE RECHERCHE EUROPEENNE**

Numero de la demande

EP 94 41 0113

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | FR-A-2 473 327 (SHIMANO INDUSTRIAL COMP.LTD.)<br>REV. 1-3<br>* figures 1-4 *<br>--- | 1,6,8,9,13 | G01P3/50<br>G01C22/02<br>A63B21/00 |
| A | PATENT ABSTRACTS OF JAPAN<br>vol. 9 no. 276 (P-402) [1999] ,2 Novembre 1985<br>& JP-A-60 120208 (SUZUKI JIDOSHA KOGYO K.K.)<br>* abrégé *<br>--- | 1,5,12 | |
| A | DE-U-90 07 313 (CONRADS ET AL)<br>* page 1, ligne 4 - ligne 14 *<br>--- | 7 | |
| A | FR-A-2 532 854 (HURET ET SES FILS)<br>* page 2, ligne 2 - ligne 12; figure 1 *<br>----- | 1,2 | |
| | | | **DOMAINES TECHNIQUES RECHERCHES (Int.Cl.6)**<br><br>G01P<br>G01C<br>A63B |

Le présent rapport a été établi pour toutes les revendications

| Lieu de la recherche | Date d'achèvement de la recherche | Examinateur |
|---|---|---|
| LA HAYE | 11 Avril 1995 | Hansen, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EP0 FORM 1503 03.82 (P04C02)